# FASCICULE DE BREVET EUROPEEN

(11) **EP 4 454 083 B1**
(45) Date de publication et mention de la délivrance du brevet: **31.12.2025**
(21) Numéro de dépôt: 22809475.1
(22) Date de dépôt: 02.11.2022
(51) Int. Cl.: H02B 13/055

(54) **INSTALLATION ET PROCÉDÉ DE DISTRIBUTION D' UN MELANGE GAZEUX DIÉLECTRIQUE VERS UN APPAREILLAGE ÉLECTRIQUE À ISOLATION GAZEUSE**
INSTALLATION UND VERFAHREN ZUR VERTEILUNG EINES DIELEKTRISCHEN GASSGEMISCHS ZU EINER GASISOLIERTEN SCHALTANLAGE
INSTALLATION AND METHOD FOR DISTRIBUTING A DIELECTRIC GAS MIXTURE TO A GAS INSULATED SWITCHGEAR

(30) Priorité: 20.12.2021 FR 2113982
(43) Date de publication de la demande: 30.10.2024
(73) Titulaire: Air Liquide Electronics Systems, 75007 Paris (FR)
(72) Inventeur: FRÉDÉRIC, Loray, 38130 Echirolles (FR); TODOROVA, Vanina, 38130 Echirolles (FR); DULPHY, Hervé, 38130 Echirolles (FR)
(74) Mandataire: Air Liquide
(86) Numéro de dépôt international: PCT/EP2022/080519
(87) Numéro de publication internationale: WO 2023/117190

(56) Documents cités:
- EP-A2- 1 014 521
- WO-A1-2014/037031
- WO-A1-2017/093259
- CN-U- 204 063 559
- JP-A- 2008 232 226
- US-A- 6 105 631
- - AIR LIQUIDE: "Cart for gas tank: a ready-to-use autonomous storage", 7 December 2021 (2021-12-07), XP055945991, Retrieved from the Internet <URL:https://ales.airliquide.com/sites/ales/files/2021/12/07/ales_mouv_c4gt_brochure_a4_11.21_sd.pdf> [retrieved on 20220725]

## Description

La présente invention concerne une installation de distribution d'un mélange gazeux diélectrique destiné à être utilisé dans un appareillage électrique à isolation gazeuse, en particulier un appareillage à haute tension. L'installation permet de fabriquer le mélange gazeux diélectrique sur le site d'utilisation et de distribuer le mélange ainsi fabriqué directement dans l'appareillage afin d'y assurer des fonctions d'isolation électrique. L'invention porte également sur un procédé de distribution de mélange mettant en œuvre une telle installation.

En particulier, une installation et un procédé selon l'invention sont destinés à distribuer des mélanges comprenant au moins un fluide isolant tel une perflurocétone ou un perfluoronitrile et au moins un gaz porteur tel du dioxyde de carbone (CO₂), de l'azote (N₂), de l'oxygène (O₂), de l'air ou de l'air synthétique. Notons que le fluide isolant est désigné comme tel du fait de sa rigidité diélectrique et de son pouvoir de coupure élevés, ledit au moins un gaz porteur pouvant lui aussi avoir des propriétés d'isolation électrique.

Le terme d'appareillage électrique désigne dans la présente demande aussi bien des appareils constituant les postes de distribution que les lignes de transport d'énergie électrique.

Parmi les postes de distribution à isolation gazeuse, on connaît notamment les postes du nom de Poste Sous Enveloppe Métallique (PSEM), également désignés en langue anglaise par les termes « Gas Insulated Switchgear » (GIS).

Les lignes à haute tension à isolation gazeuse sont connues sous le nom de Lignes à Isolation Gazeuse (LIG) qu'elles soient d'assemblages soudés ou boulonnés, également désignées en langue anglaise par les termes « Gas Insulated Line » (GIL) pour les assemblages soudés ou « Gas Insulated Busduct » (GIB) pour les assemblages boulonnés.

Notons que l'invention peut également s'appliquer à tout type d'appareils électriques isolés sous pression de gaz, c'est-à-dire comprenant une enveloppe fermée contenant du gaz, notamment des disjoncteurs, sectionneurs, transformateurs de courant, transformateurs de tension,... , ainsi qu'à des appareils combinant tout ou partie des dispositifs susmentionnés

Notons que les termes « haute tension » couvrent l'ancienne appellation « moyenne tension » (ou haute tension A) qui désigne une tension supérieure à 1000 volts en courant alternatif et supérieure à 1500 volts en courant continu, et l'ancienne appellation « haute tension » (ou haute tension B) qui désigne une tension supérieure à 50000 volts en courant alternatif et supérieure à 75000 volts.

Une des principales technologies d'isolation des appareillages électriques est l'isolation par un gaz ou mélange gazeux diélectrique confiné sous pression autour des pièces et éléments sous tension. Ce gaz ou mélange gazeux isolant permet aussi de réaliser la fonction d'extinction de l'arc issu de la coupure électrique.

Actuellement, le gaz le plus souvent utilisé dans ce type d'appareil est l'hexafluorure de soufre (SF₆). Ce gaz présente, en effet, une rigidité diélectrique relativement haute, une bonne conductivité thermique et des pertes diélectriques peu élevées. Il est chimiquement inerte et non toxique pour l'homme et les animaux et, après avoir été dissocié par un arc électrique, il se recombine rapidement et presque totalement. De plus, il est ininflammable et son prix est, encore aujourd'hui, modéré. Toutefois, le SF₆ a pour inconvénient majeur de présenter un potentiel de réchauffement global (PRG ou GWP pour « Global Warming Potential ») 24000 fois plus élevé que celui du CO₂ et une durée de séjour dans l'atmosphère de 3200 ans, ce qui le place parmi les gaz à fort pouvoir d'effet de serre. Le SF₆ a donc été inscrit par le Protocole de Kyoto (1997) sur la liste des gaz dont les émissions sont à limiter.

Le meilleur moyen de limiter les émissions du SF₆ consiste à limiter l'utilisation de ce gaz, ce qui a conduit les industriels à chercher des alternatives au SF₆. Les gaz dits « simples » comme l'air ou l'azote, qui n'ont pas d'impact négatif sur l'environnement, présentent une rigidité diélectrique beaucoup plus faible que celle du SF₆. Ainsi, par exemple, les rigidités diélectriques en tension alternative (50 Hz) de l'air et de l'azote sont sensiblement trois fois plus faibles que celle du SF₆.

De ce fait, l'utilisation de ces gaz simples pour l'isolation électrique et/ou l'extinction d'arc électrique dans des appareils électriques implique d'augmenter de façon drastique le volume et/ou la pression de remplissage de ces appareils, ce qui va à l'encontre des efforts qui ont été réalisés au cours de ces dernières décennies pour développer des appareils électriques compacts et sûrs pour le personnel et à encombrement de plus en plus réduit.

Les industriels ont donc cherché des alternatives offrant les mêmes propriétés d'isolation et de coupure d'arc que le SF₆. A cet effet, de nouveaux mélanges gazeux de substitution ayant un impact environnemental réduit ont été développés. Ces mélanges gazeux sont basés sur au moins un gaz isolant choisi parmi une perfluorocétone à cinq atomes de carbone ou un perfluoronitrile à quatre atomes de carbone, mélangé à un gaz porteur ou gaz de dilution à GWP très faible, comme du CO₂ qui a un GWP égal à 1, ou à GWP nul, tel l'azote ou l'air.

La composition de ces nouveaux mélanges gazeux varie selon les fonctionnalités de l'appareillage à remplir, notamment selon le niveau de tension de l'appareillage ou ses fonctionnalités électriques. La teneur en chaque composant du mélange pourra aussi varier. Il est donc nécessaire de pouvoir remplir l'appareillage avec le mélange approprié.

S'agissant du remplissage d'appareillages électriques, une solution est de préparer les mélanges dans des centres de conditionnement dédiés, de les conditionner dans des récipients de stockage tel des bouteilles ou des containers et de livrer les récipients sur le site d'utilisation. Le remplissage de l'appareillage s'effectue à partir du récipient.

Cette solution pose plusieurs problèmes. Les mélanges gazeux diélectriques sont conditionnés sous forme liquéfiée et nécessite une étape d'homogénéisation. En effet, le mélange liquéfié est composé de deux phases liquide et gazeuse en équilibre l'une avec l'autre. Les propriétés physiques différentes des composants du mélange, notamment points d'ébullition et pressions de vapeur saturant, rendent le mélange intrinsèquement hétérogène au sein du récipient de stockage. En outre, le fait de le prélever en phase gazeuse ou liquide implique une altération des proportions respectives des constituants du mélange.

Par ailleurs, l'utilisation de récipients conduit à une autonomie limitée avec un arrêt de la distribution préjudiciable à l'efficacité des opérations. Les délais d'approvisionnement des mélanges de gaz pouvant être relativement longs, l'utilisateur doit gérer son stock de bouteilles afin d'assurer une continuité de ses opérations. Différents types de mélanges peuvent être nécessaires, ce qui complexifie encore la logistique. Les opérations de connexion/déconnexion des bouteilles sont aussi fastidieuses et augmentent le risque de contaminer le mélange de gaz avec de l'air ambiant.

Un autre problème concerne la précision de réalisation du mélange qui peut se révéler insuffisante. A l'incertitude sur les valeurs de concentration du mélange fabriqué s'ajoute les écarts de fabrications qui peuvent exister entre différentes bouteilles. De tels écarts peuvent faire varier sensiblement les résultats produits par l'unité consommatrice à chaque changement de bouteille. De plus, la composition du mélange préparée à l'avance est susceptible d'être altérée, notamment par des fuites de la phase gazeuse ou de la phase liquide.

Une autre solution consiste à préparer le mélange gazeux diélectrique sur le site d'utilisation. On connaît notamment la méthode de fabrication par contrôle de débits. Cette méthode consiste à prélever les composants du mélange dans des récipients séparés pour les envoyer vers un mélangeur de gaz. Les teneurs en chaque composant sont contrôlées par ajustement de leurs débits d'écoulement respectifs vers le mélangeur. Cependant, la précision sur le mélange obtenu est limitée. En effet, les régulateurs de débits sont sensibles à la température ambiante, ce qui limite leur utilisation en plein air. Les régulateurs de débit sont aussi sensibles à la température du gaz qu'ils régulent et ils exigent une alimentation en gaz pur avec une pression stable pour une stabilité optimale. Par ailleurs, certains fluides isolants, comme la perfluorocétone, sont à l'état liquide et ne peuvent pas être prélevés en phase gazeuse à la pression atmosphérique. Une solution est de pressuriser le récipient avec de l'azote ou du CO₂ pour soutirer la phase liquide, puis de vaporiser la phase liquide. Outre la complexité et les contraintes imposées par cette solution, on observe une diffusion de l'azote ou du CO2 dans la phase liquide, ce qui altère le fonctionnement et la précision des régulateurs de débit.

Les documents XP055945991 ("Cart for gas tank: a ready-to-use autonomous storage", Air Liquide 2021), EP1014521A2, WO2014037031A1, US6105631A et WO2017093259A1 divulguent des exemples d'installations connues de distribution de gaz isolants. Les documents CN204063559U et JP2008232226A montrent des moyens de chauffage pour réservoirs de gaz.

L'invention a pour but de pallier tout ou partie des inconvénients mentionnés ci-dessus, notamment en proposant une installation de distribution d'un mélange gazeux diélectrique adapté à l'isolation gazeuse d'un appareillage électrique qui permette de contrôler précisément la composition du mélange, qui offre une continuité et une flexibilité de distribution, en termes notamment de composition et de teneurs en les composants du mélange gazeux et qui permette de distribuer un mélange de composition stable et avec un débit suffisant pour une utilisation à l'échelle industrielle.

A cette fin, la solution de l'invention est une installation de distribution d'un mélange gazeux isolant électrique vers un appareillage électrique à isolation gazeuse, en particulier un appareillage électrique haute tension, ladite installation comprenant :
- un premier récipient destiné à contenir un fluide isolant à l'état liquide ou liquéfié,
- des premiers moyens de chauffage configurés pour chauffer le fluide isolant dans le premier récipient de sorte que ledit premier récipient produit à une première sortie une phase gazeuse du fluide isolant,
- un deuxième récipient destiné à contenir un fluide porteur et configuré pour produire une phase gazeuse du fluide porteur à une deuxième sortie du deuxième récipient,
- un premier circuit de transfert configuré pour transférer la phase gazeuse du fluide isolant depuis la première sortie du premier récipient jusqu'à un point de combinaison, le premier circuit de transfert comprenant une première partie amont reliée au premier récipient et une première partie aval reliée d'une part à la première partie amont et d'autre part au point de combinaison,
- un deuxième circuit de transfert configuré pour transférer la phase gazeuse du fluide porteur depuis la deuxième sortie du deuxième récipient jusqu'au point de combinaison,
- un circuit de distribution relié fluidiquement au point de combinaison et configuré pour distribuer un mélange gazeux isolant électrique comprenant la phase gazeuse du fluide isolant et la phase gazeuse du fluide porteur vers l'appareillage électrique à haute tension, la première partie aval du premier circuit de transfert comprenant un premier dispositif régulateur de débit configuré pour réguler et/ou ajuster le débit de phase gazeuse du fluide isolant s'écoulant vers le point de combinaison, ladite installation comprenant en outre des deuxièmes moyens de chauffage configurés pour chauffer la phase gazeuse du fluide isolant au moins au niveau du point de combinaison et de la partie aval du premier circuit de transfert.

Selon le cas, l'invention peut comprendre l'une ou plusieurs des caractéristiques énoncées ci-après.

Les deuxièmes moyens de chauffage sont en outre configurés pour chauffer la phase gazeuse du fluide isolant au niveau d'au moins une portion de la première partie amont du premier circuit de transfert.

La première partie amont du circuit de transfert comprend au moins une conduite de fluide, les deuxièmes moyens de chauffage comprenant un premier dispositif chauffant agencé autour de tout ou partie de ladite conduite de fluide, en particulier le premier dispositif chauffant est du type résistif ou inductif.

Les deuxièmes moyens de chauffage comprennent un deuxième dispositif chauffant agencé autour du point de combinaison et de la première partie aval du premier circuit de transfert.

Le deuxième dispositif chauffant comprend une enveloppe thermiquement isolante définissant un volume interne dans lequel la partie aval du premier circuit de transfert, le premier dispositif régulateur de débit, et le point de combinaison sont agencés, et un organe chauffant adapté à chauffer ledit volume interne, en particulier l'organe chauffant est du type résistif.

L'enveloppe thermiquement isolante comprend au moins une couche d'un matériau souple, en particulier le matériau souple comprend au moins une toile tissée de fils formés d'un matériau thermiquement isolant ou un non-tissé de fibres formés d'un matériau thermiquement isolant.

L'enveloppe thermiquement isolante est formée de plusieurs panneaux reliés entre eux par des moyens de fixation amovibles.

Le deuxième circuit de transfert comprend une deuxième partie amont reliée au deuxième récipient et une deuxième partie aval reliée au point de combinaison, ladite deuxième partie aval comportant un deuxième dispositif régulateur de débit configuré pour réguler et/ou ajuster le débit de phase gazeuse du fluide porteur s'écoulant vers le point de combinaison, le deuxième dispositif chauffant étant de préférence configuré pour chauffer la deuxième partie aval du deuxième circuit de transfert.

L'installation comprend en outre au moins un récipient additionnel destiné à contenir un fluide porteur additionnel et configuré pour produire une phase gazeuse dudit fluide porteur additionnel à une sortie du récipient additionnel, l'installation comprenant un circuit de transfert additionnel configuré pour transférer la phase gazeuse du fluide porteur additionnel depuis la sortie du récipient additionnel jusqu'au point de combinaison, le circuit de transfert additionnel comprenant une partie amont additionnelle reliée au récipient additionnel et une partie aval additionnelle reliée au point de combinaison, ladite partie aval additionnelle comportant un dispositif régulateur de débit additionnel configuré pour réguler et/ou ajuster le débit de phase gazeuse du fluide porteur additionnel s'écoulant vers le point de combinaison, le deuxième dispositif de chauffage étant de préférence configuré pour chauffer la partie aval additionnelle du circuit de transfert additionnel.

Les premiers moyens de chauffage sont configurés pour chauffer le fluide isolant liquéfié dans le premier récipient à une première température, les deuxièmes moyens de chauffage étant configurés pour chauffer la phase vapeur du fluide isolant liquéfié à une deuxième température supérieure à la première température au moins au niveau du point de combinaison et de tout ou partie du premier circuit de transfert.

Les premiers moyens de chauffage sont configurés pour délivrer une puissance de chauffage variable, l'installation comprenant au moins un capteur de pression configuré pour mesurer la pression régnant dans le premier récipient et une première unité de commande reliée au capteur de pression et aux premiers moyens de chauffage, la première unité de commande étant configurée pour faire varier la puissance de chauffage délivrée par les premiers moyens de chauffage en fonction de la pression mesurée par le capteur de pression.

Les premiers moyens de chauffage sont configurés pour délivrer une puissance de chauffage variable, l'installation comprenant au moins un organe de mesure de température configuré pour mesurer la température du premier récipient et une première unité de commande reliée à l'organe de mesure de température et aux premiers moyens de chauffage, la première unité de commande étant configurée pour faire varier la puissance de chauffage délivrée par les premiers moyens de chauffage en fonction de la température mesurée par l'organe de mesure de température.

Le deuxième récipient est destiné à contenir le fluide porteur sous forme liquéfiée, l'installation comprenant des troisièmes moyens de chauffage configuré pour chauffer le fluide porteur liquéfié dans le deuxième récipient de façon à vaporiser au moins une partie du fluide porteur liquéfié et à distribuer une phase gazeuse du fluide porteur dans le deuxième circuit de transfert.

Le deuxième circuit de transfert comprend un organe de détente configuré pour réduire la pression de la phase gazeuse du fluide porteur, un réchauffeur agencé en amont de l'organe de détente de façon à chauffer la phase gazeuse avant sa détente par l'organe de détente.

Le circuit de distribution comprend au moins l'un parmi : un dispositif mélangeur configuré pour mélanger la phase gazeuse du fluide isolant et la phase gazeuse du fluide porteur, un organe élévateur de pression agencé en aval du dispositif mélangeur, un réservoir tampon agencé en amont de l'organe élévateur de pression.

Selon un autre aspect, l'invention concerne un procédé de distribution d'un mélange gazeux isolant électrique vers un appareillage électrique à haute tension, ledit procédé comprenant les étapes suivantes :
- a) chauffage d'un fluide isolant à l'état liquide ou liquéfié dans un premier récipient par des premiers moyens de chauffage de façon à vaporiser au moins une partie du fluide isolant liquéfié et à produire une phase gazeuse du fluide isolant dans le premier récipient,
- b) passage de la phase gazeuse du fluide isolant dans un premier circuit de transfert de façon à transférer la phase gazeuse du fluide isolant depuis le premier récipient jusqu'à un point de combinaison, le premier circuit de transfert comprenant une première partie amont reliée au premier récipient et une première partie aval reliée d'une part à la première partie amont et d'autre part au point de combinaison,
- c) passage d'une phase gazeuse d'un fluide porteur depuis un deuxième récipient dans un deuxième circuit de transfert de façon à transférer la phase gazeuse du fluide porteur jusqu'au point de combinaison,
- d) combinaison de la phase gazeuse du fluide isolant et de la phase gazeuse du fluide porteur au point de combinaison et passage de la phase gazeuse du fluide isolant et de la phase gazeuse du fluide porteur combinées dans un circuit de distribution adapté à distribuer vers l'appareillage électrique à haute tension un mélange gazeux isolant électrique comprenant la phase gazeuse du fluide isolant et la phase gazeuse du fluide porteur,
- e) régulation et/ou ajustement du débit de phase gazeuse du fluide isolant s'écoulant vers le point de combinaison au moyen d'un premier dispositif régulateur de débit agencé sur la première partie aval du premier circuit de transfert,
- f) chauffage de la phase gazeuse du fluide isolant au moins au niveau du point du point de combinaison et de la partie aval du premier circuit de transfert par des deuxièmes moyens de chauffage.

L'invention va maintenant être mieux comprise grâce à la description détaillée suivante faite à titre illustratif et non limitatif en référence aux figures annexées décrites ci-après.
[Fig.1] La [Fig.1] schématise une installation selon un mode de réalisation de l'invention.
[Fig.2] La [Fig.2] schématise une installation selon un autre mode de réalisation de l'invention.

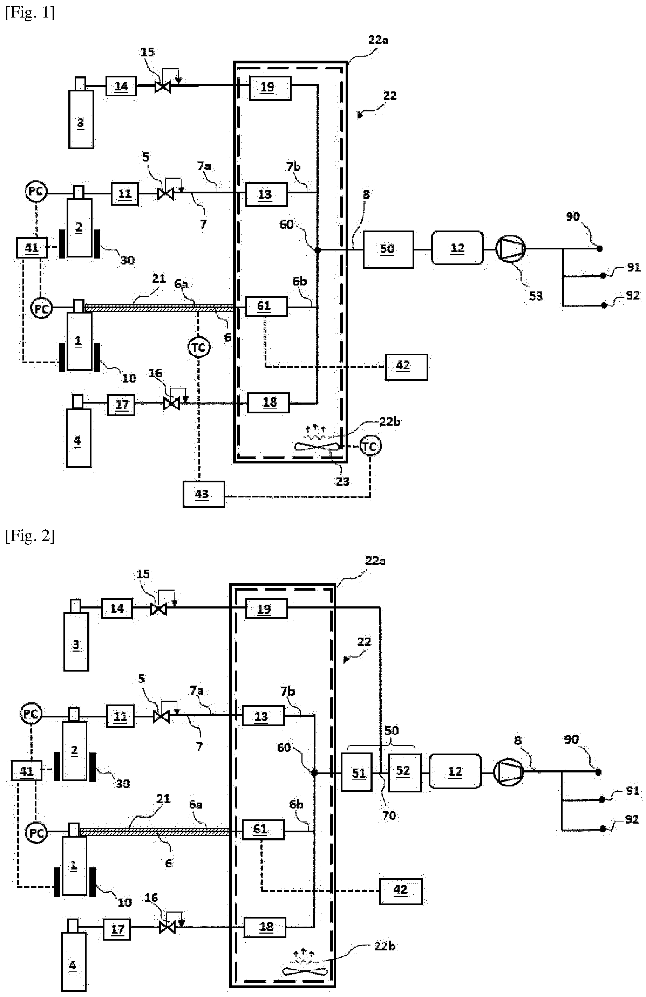

La [Fig.1] représente une installation comprenant un premier récipient 1 de fluide isolant et un deuxième récipient 2 de fluide porteur. Les fluides sont de nature différente. Il s'agit préférentiellement de corps purs, simples ou composés. Chacun des récipients peut être une bouteille, typiquement une bouteille pouvant présenter un volume en eau jusqu'à 50 L, un ensemble de bouteilles raccordées entre elles pour former un cadre de bouteilles ou un réservoir de plus grande contenance, notamment une contenance jusqu'à 1000 L, tel un réservoir de stockage cryogénique ou un réservoir agencé sur un camion-remorque.

L'installation selon l'invention est adaptée à produire des mélanges gazeux diélectriques à au moins deux composants. Bien entendu, l'installation peut comprendre plus de deux récipients et produire des mélanges à plus de deux constituants, en particulier des mélanges de gaz ternaires ou quaternaires. Ainsi, la [Fig.1] illustre le cas où l'installation est configurée pour produire un mélange gazeux à quatre constituants, à partir des premier et deuxième récipients 1, 2 et éventuellement de deux récipients 3, 4 additionnels. En particulier, les récipients 3, 4 sont adaptés à contenir des éventuels fluides porteurs additionnels et configuré pour produire des phases gazeuses desdits fluides porteurs additionnels à leurs sorties respectives.

Dans le cadre de l'invention, la distribution comprend la préparation, i. e. la fabrication du mélange et son acheminement en direction de l'appareillage.

Un premier circuit de transfert 6 est relié fluidiquement d'une part à une première ouverture du premier récipient 1 et d'autre part à un point de combinaison 60. Un deuxième circuit de transfert 7 est relié fluidiquement d'une part à une deuxième ouverture du deuxième récipient 2 et d'autre part au point de combinaison 60. Des circuits de transfert additionnels peuvent être prévus pour chacun des récipients 3, 4 additionnels, le cas échéant.

Le premier circuit de transfert 6 comprend une première partie amont 6a reliée au premier récipient 1 et une première partie aval 6b reliée d'une part à la première partie amont 6a et d'autre part au point de combinaison 60. Le deuxième circuit de transfert 7 comprend une deuxième partie amont 7a reliée au deuxième récipient 2 et une deuxième partie aval 7b reliée au point de combinaison 60.

La partie aval du premier circuit de transfert 6 comporte un premier dispositif régulateur de débit 61 configuré pour réguler et/ou ajuster le débit de fluide isolant s'écoulant vers le point de combinaison 60 suivant une première consigne de débit D1. La première consigne D1 peut être déterminée en fonction d'une teneur cible C1 du mélange en le fluide isolant.

Par « fluide isolant », on entend un fluide à fort pouvoir isolant, c'est-à-dire ayant des capacités d'isolation électrique et d'extinction d'arc électrique suffisantes pour être utilisé pour l'isolation gazeuse d'appareillage électrique à haute tension.

En tant que fluide isolant, on peut notamment utiliser un fluide contenant au moins une flurocétone et/ou au moins un perfluoronitrile. En particulier, le fluide isolant peut être choisi parmi les fluides diélectriques de la gamme Novec^{™} commercialisée par 3M, par exemple le fluide isolant de nom commercial 3M^{™} Novec^{™} 4710 (ci-après désigné C4-FN) et le fluide isolant de nom commercial 3M^{™} Novec^{™} 5110 (ci-après désigné C5-FK). De préférence, le fluide isolant est le composant minoritaire dans le mélange gazeux distribué.

Par « fluide porteur » on entend un gaz adapté à diluer le fluide isolant de façon à rendre les propriétés globales du mélange adaptées à l'usage final. Le mélange gazeux peut contenir au moins un fluide porteur choisi parmi le dioxyde de carbone (CO₂), l'azote (N₂), l'oxygène (O₂), l'air, l'air synthétique. Notons que le fluide porteur peut présenter lui aussi des propriétés d'isolation électrique. De préférence, le mélange gazeux contient au moins du CO₂ en tant que fluide porteur. Au moins un gaz porteur peut ainsi exercer une fonction de dilution et/ou être un gaz actif, par exemple exercer une fonction de suroxygénation de l'atmosphère gazeuse isolant l'appareillage. En particulier, l'oxygène peut être utilisé pour contrebalancer les effets de la coupure d'arc qui produisent une décomposition du CO₂.

Dans le cadre de l'invention, le fluide isolant est stocké à l'état liquide ou sous forme de gaz liquéfié dans le premier récipient 1. En particulier, un fluide isolant du type C4-FN est un gaz liquéfié. Un fluide isolant du type C5-FK est un liquide.

L'installation comprend des premiers moyens de chauffage 10 configurés pour chauffer le fluide isolant liquéfié dans le premier récipient 1.

Cela permet de chauffer au moins une partie du fluide isolant dans le récipient 1 et d'accroître la pression de vapeur saturante du fluide isolant. En effet, les pressions de vapeur saturante des fluides isolants sont relativement basses à température ambiante, par exemple 2,5 barA à 20 °C pour C4-FN et 0,8 barA à 20 °C pour C5-FK. En chauffant le premier récipient 1, on augmente la quantité de fluide isolant pouvant être vaporisée dans le récipient 1 et donc le débit de phase gazeuse qui peut être distribuée à partir du récipient 1.

En outre, le fluide liquéfié est composé de deux phases, liquide et gazeuse, en équilibre l'une avec l'autre. Lorsque l'on soutire la phase gazeuse d'un récipient de gaz liquéfié, une partie du liquide doit être vaporisée de manière à régénérer la phase gazeuse à mesure qu'elle est utilisée afin de maintenir l'équilibre dans le récipient. Le liquide se met donc à refroidir du fait de l'énergie utilisée pour passer d'une phase vers l'autre.

Le chauffage du récipient 1 permet de compenser l'énergie de vaporisation du fluide isolant, notamment dans le cas du perfluoronitrile comme fluide isolant, et si besoin d'entretenir aussi une pression de vapeur saturante plus élevée qu'à la température ambiante, notamment dans le cas du perfluorocétone comme fluide isolant. Cela a pour conséquences le maintien de la phase gazeuse à une température, un débit et une pression stables

De préférence, les premiers moyens de chauffage 10 sont externes aux récipients. Dans un mode de réalisation, les moyens de chauffage 10 sont disposés autour de tout ou partie du récipient 1 et s'étendent sur tout ou partie de la hauteur du récipient 1, de préférence, au moins au niveau de la partie inférieure des récipients.

Les premiers moyens de chauffage peuvent être configurés pour chauffer au moins une partie de la surface extérieure du récipient 1. Le transfert de chaleur à la phase liquide a lieu entre la surface chauffée et la phase liquide du fluide isolant. Il est aussi envisageable que les premiers moyens de chauffage 10 soient internes au récipient. Notons que les premiers moyens de chauffage peuvent être configurés pour chauffer la surface du premier récipient 1 à des températures allant de 15 à 65 °C, de préférence de 50 à 55 °C pour le perfluorocétone et de préférence de 20 à 35°C pour le perfluoronitrile.

Les premiers moyens de chauffage 10 peuvent se présenter sous la forme d'au moins une ceinture chauffante, un cordon chauffant ou coquille à circulation de fluide caloporteur. Selon le cas, les premiers moyens de chauffage 10 peuvent être du type inductif ou résistif. Par exemple, on peut chauffer le corps du récipient 1 à l'aide d'au moins un élément conducteur résistif dans lequel le passage d'un courant électrique produit de la chaleur.

Selon une possibilité avantageuse, les premiers moyens de chauffage 10 comprennent des moyens d'induction magnétique capables de créer un champ magnétique dans au moins une partie de l'enveloppe du récipient 1 et de chauffer le matériau du récipient 1 grâce au courant électrique induit. L'utilisation de premiers moyens de chauffage de type inductif permet de s'affranchir du transfert d'énergie par conduction puisque les courants induits par l'inducteur chauffent directement le matériau de la bouteille dans son épaisseur. Cela améliore les transferts énergétiques et conduit à des débits de distribution plus élevés.

Le fluide porteur peut être stocké dans le deuxième récipient 2 à l'état liquide ou sous forme de gaz liquéfié. De préférence, le fluide porteur est un gaz liquéfié, en particulier du CO₂.

Dans ce cas, comme illustré sur la [Fig.1], l'installation comprend des troisièmes moyens de chauffage 30 configuré pour chauffer le fluide porteur liquide ou liquéfié dans le deuxième récipient 2 de façon à vaporiser au moins une partie du fluide porteur liquéfié et à distribuer une phase gazeuse du fluide porteur dans le deuxième circuit de transfert 7. Cela permet de fournir l'énergie nécessaire au deuxième récipient pour compenser la perte d'énergie lors de l'évaporation du fluide porteur et d'assurer un débit de distribution suffisant et stable. De préférence, les troisièmes moyens de chauffage 30 sont du type inductif, en particulier du même type que les premiers moyens de chauffage 10. Notons que les troisièmes moyens de chauffage peuvent être configurés pour chauffer la surface du deuxième récipient 2 à des températures allant de 15 à 65 °C, de 50 à 55 °C pour le perfluorocétone et de préférence de 20 à 35°C pour le perfluoronitrile.

Dans le cas où le fluide porteur est stocké à l'état gazeux, il n'est pas nécessaire de prévoir des moyens de chauffage du récipient. Cela s'applique au deuxième récipient de fluide porteur, ainsi qu'à d'autres récipients de fluide porteur de l'installation, le cas échéant. Ainsi, la [Fig.1] schématise une installation comprenant, des récipients additionnels 3, 4 contenant des fluides porteurs additionnels. En particulier, les fluides porteurs additionnels peuvent être de l'oxygène et de l'azote stockés à l'état gazeux dans leurs récipients respectifs.

Comme on le voit sur la [Fig.1], les phases gazeuses du fluide isolant et du gaz porteur sont acheminées par leur circuit de transfert 6, 7 respectif jusqu'à un point de combinaison 60 au niveau duquel les phases sont combinées. Les phases combinées s'écoulent ensuite dans un circuit de distribution 8 adapté à distribuer vers l'appareillage électrique à haute tension un mélange gazeux isolant électrique comprenant la phase gazeuse du fluide isolant et la phase gazeuse du gaz porteur. L'appareillage électrique peut être raccordé à un point de distribution 90 en vue de son remplissage.

Un problème concerne le contrôle de la température du fluide isolant vaporisé. En effet, la phase gazeuse du fluide isolant doit être maintenue à une température supérieure ou égale à la température de vaporisation sur l'ensemble du trajet depuis le récipient jusqu'au point d'utilisation. La présence de points plus froids sur le trajet du fluide en aval du récipient peut engendrer une condensation de la phase gazeuse au niveau de ces points. Ces condensats en suspension dans la phase gazeuse conduisent au dysfonctionnement des contrôleurs de débits et à une instabilité du débit et donc de la concentration en fluide isolant.

Pour y remédier, l'installation comprend en outre des deuxièmes moyens de chauffage 21, 22 configurés pour chauffer la phase gazeuse du fluide isolant au moins au niveau du point de combinaison 60 et de la partie aval 6b du premier circuit de transfert 6.

L'invention permet ainsi un contrôle plus efficace de la température du fluide isolant. La phase gazeuse du fluide isolant peut être maintenue à une température supérieure ou égale à la température de vaporisation au niveau du point de combinaison 60 et de la partie aval 6b. Il est important de chauffer le fluide isolant jusqu'à son point de combinaison 60 avec le fluide porteur puisque c'est lorsque le fluide isolant est à l'état pur que le risque de condensation est le plus élevé. Une fois dilué dans le fluide porteur, le risque de condensation est éliminé car sa pression partielle sera nettement inférieure à ce qu'elle était à l'état pur, et donc inférieure à sa pression de vapeur saturante pour la température considérée.

Grâce à l'invention, on chauffe le fluide isolant au niveau de la partie aval qui comprend le premier dispositif régulateur de débit, afin d'éviter une condensation de la phase gazeuse. On évite ainsi les risques de bouchage ou de modification de section de passage de fluide à ce niveau, ce qui serait préjudiciable à la précision du mélange réalisé. De plus, le deuxième dispositif chauffant permet de contrôler la température du premier dispositif régulateur, ce qui permet de s'affranchir des variations de température de l'environnement extérieur. Les conditions de fonctionnement du régulateur de débit sont stables, ce qui garantit une meilleure précision et la stabilité de la concentration du fluide isolant dans le mélange, même en utilisation sur site. Le chauffage simultané du fluide au niveau du point de combinaison évite l'apparition de points froids sur le premier circuit de transfert 6 jusqu'à ce que la phase gazeuse du fluide isolant soit combinée avec la phase gazeuse du fluide porteur.

Un autre avantage de l'invention est qu'au lieu de soutirer le fluide isolant à l'état liquide puis de le vaporiser comme dans les installations de l'art antérieur, l'installation met en œuvre un soutirage du fluide isolant en phase gazeuse. Pour ce faire, le premier récipient 1 est chauffé, pour augmenter sa pression interne au lieu d'être pressurisé par un fluide secondaire. Cela permet de conserver la pureté du fluide, donc la précision du débit et de la concentration finale.

De préférence, les deuxièmes moyens de chauffage 21, 22 sont en outre configurés pour chauffer la phase gazeuse du fluide isolant au niveau d'au moins une portion de la première partie amont 6a du premier circuit de transfert 6. Cela permet de chauffer la phase gazeuse sur la majeure partie, voire la totalité de son trajet vers le point de combinaison et de minimiser encore plus le risque de recondensation de la phase vapeur en aval du premier récipient 1.

De préférence, la première partie amont 6a comprend au moins une conduite de fluide 6a reliée à la première ouverture du premier récipient 1. Les deuxièmes moyens de chauffage 21, 22 comprenant un premier dispositif chauffant 21 agencé autour de tout ou partie de ladite conduite de fluide 6a. De préférence, le premier dispositif chauffant 21 est du type résistif ou inductif. Le premier dispositif chauffant peut se présenter sous la forme d'un tuyau ou manchon chauffant. Le premier dispositif chauffant peut par exemple être une résistance électrique intégrée à une structure flexible, éventuellement revêtue d'une gaine extérieure isolante thermiquement. De préférence, le premier dispositif de chauffage s'étend depuis la première ouverture et sur toute la conduite de fluide 6a.

Avantageusement, les deuxièmes moyens de chauffage 21, 22 comprennent un deuxième dispositif chauffant 22 configuré pour chauffer au moins la phase gazeuse du fluide isolant au niveau du point de combinaison 60 et au niveau de la partie aval du premier circuit de transfert 6 reliée audit point de combinaison 60. De préférence, le deuxième dispositif chauffant 22 est agencé tout autour du point de combinaison 60 et de la première partie aval 6b du premier circuit de transfert 6.

De préférence, le deuxième dispositif chauffant 22 est physiquement distinct du premier dispositif chauffant 21 afin de pouvoir d'adapter au mieux aux composants à chauffer sur la zone concernée.

De préférence, les deuxièmes moyens de chauffage peuvent être configurés pour chauffer la surface du circuit de transfert 6 à des températures allant de 15 à 65 °C, de préférence de 30 à 55 °C.

Avantageusement, le deuxième dispositif chauffant 22 comprend une enveloppe thermiquement isolante 22a définissant un volume interne dans lequel au moins la partie aval du premier circuit de transfert 6 et le point de combinaison 60 sont agencés. En outre, le deuxième dispositif de chauffage 22 comprend un deuxième organe chauffant 22b adapté à chauffer ledit volume interne.

L'utilisation d'une enveloppe thermiquement isolante chauffée permet d'assurer un contrôle plus efficace de la température du fluide isolant vaporisé, simultanément au niveau du point de combinaison et de la partie aval du circuit de transfert. L'agencement des composants principaux de distribution dans un même volume chauffé permet un contrôle plus efficace et plus simple de la température que dans le cas où les composants seraient chauffés par des systèmes chauffants indépendants.

De préférence, le deuxième dispositif chauffant 22 est de type résistif. Il peut comprendre au moins une résistance électrique agencée monté sur ou à proximité d'une des parois de l'enveloppe isolante 22a. Le transfert thermique a lieu par convection, de préférence par convection forcée. Le deuxième dispositif chauffant 22 peut être associé à un moyen de circulation d'air 23 configuré pour faire circuler de l'air depuis le deuxième dispositif chauffant 22 en direction du volume interne de l'enceinte 2. Cela permet de chauffer efficacement tout le volume interne de l'enveloppe isolante. En particulier, les moyens de circulation d'air 23 peuvent comprendre au moins un ventilateur. De préférence le moyen de circulation d'air 23 est configuré pour récupérer de l'air froid de l'intérieur de l'enveloppe isolante, de préférence d'une région centrale de l'enveloppe isolante, pour qu'il soit chauffé par le deuxième dispositif chauffant 22 et pour rejeter l'air chauffé. L'air peut circuler au sein de l'étuve en circuit fermé, notamment l'air mis en circulation est chauffé, circule dans le volume interne puis est aspiré par les moyens de circulation pour être à nouveau dirigé vers le deuxième dispositif chauffant 22.

En particulier, le deuxième dispositif chauffant 22 peut être configuré pour chauffer le volume interne de l'enveloppe 22a à des températures allant de 15 à 65 °C, de préférence de 50 à 55 °C pour le perfluorocétone et de préférence de 20 à 35°C pour le perfluoronitrile.

De préférence, l'enveloppe thermiquement isolante 22a est une enveloppe souple. Ainsi, elle peut englober des composants de forme complexe qu'il serait compliqué de chauffer individuellement. Outre le ou les régulateurs de débit, le circuit de transfert peut comprendre différents composants, vannes, conduits, connecteurs fluidiques.... L'enveloppe peut être arrangée autour de ces différents composants tout en minimisant le volume interne pour ne pas le chauffer inutilement. L'enveloppe thermiquement isolante a aussi l'avantage de stabiliser la température de fonctionnement des dispositifs régulateurs de débits de façon à optimiser la stabilité de ces débits.

L'enveloppe peut comprendre au moins une couche d'un matériau souple, tel au moins une toile tissée de fils formés d'un matériau thermiquement isolant, tel des fils de verre ou de téflon, ou un non-tissé de fibres formées d'un matériau thermiquement isolant tel des fibres de verre ou de téflon. Le terme « toile » s'entend d'un produit manufacturé obtenu par le tissage de fils, c'est-à-dire l'entrelacement de fils de manière à obtenir une toile tissée. Par « non-tissé », ou intissé, on entend un produit manufacturé formés de fibres disposées en feuille, orientées de manière aléatoire ou directionnelle, et liées entre elles par des procédés mécaniques, chimiques et/ou thermiques, en excluant le tissage. En particulier, le non-tissé peut être formé de fibres liées par friction, cohésion ou adhésion. L'utilisation d'une toile ou d'un intissé confère une souplesse adéquate à l'enveloppe.

En particulier, l'enveloppe thermiquement isolante est une enveloppe souple à double paroi comprenant au moins un matériau calorifuge agencé entre les parois. Les parois permettent de maintenir le matériau calorifuge en place. Elles peuvent être formées chacune d'une couche de matériau souple tel que décrite ci-dessus. Le matériau calorifuge peut comprendre notamment du verre, du silicone,... par exemple sous forme de laine ou de mousse.Selon une possibilité avantageuse, l'enveloppe thermiquement isolante est formée de plusieurs panneaux reliés entre eux par des moyens de fixation amovibles. Ainsi, l'enveloppe est modulable et peut s'adapter aux formes et aux dimensions des composants de l'installation. En particulier, les dimensions de l'enveloppe peuvent être modifiées selon le nombre de composants du mélange gazeux à distribuer. Par exemple, on pourra ajouter des panneaux et augmenter les dimensions de l'enveloppe si le nombre de fluides à utiliser augmente, puisque cela engendre une augmentation du nombre de circuits de transfert et de dispositifs régulateurs associés.

Les moyens de fixation amovibles peuvent comprendre par exemple des attaches du type Velcro^{®} comprenant chacune un composant à crochets agencé sur au moins un panneau et un composant complémentaire à boucles agencé sur un autre panneau, une liaison amovible s'opérant par mise en contact des composants.

Avantageusement, le deuxième circuit de transfert 7 comporte une deuxième partie aval 7b reliée audit point de combinaison 60, laquelle partie aval comporte de préférence un deuxième dispositif régulateur de débit 13 relié d'une part au deuxième récipient 2 et d'autre part au point de combinaison 60. Le deuxième dispositif régulateur de débit 13 est configuré pour réguler et/ou ajuster le débit de fluide porteur s'écoulant vers le point de combinaison 60 suivant une deuxième consigne de débit D2 qui peut être déterminée en fonction d'une teneur cible C2 du mélange en fluide porteur.

Le deuxième dispositif de chauffage 22 est configuré pour chauffer la deuxième partie aval du deuxième circuit de transfert 7. Ainsi, on peut aussi contrôler la température du deuxième dispositif régulateur de débit 13 et s'affranchir des perturbations extérieures, ce qui permet de distribuer sur site un mélange gazeux d'une grande précision. En particulier, la deuxième partie aval du deuxième circuit de transfert 7 est agencée dans le volume interne défini par l'enveloppe isolante 22a.

Dans le cas où l'installation comprend un ou plusieurs récipients de fluide porteur additionnels 3, 4, chacun de ces récipients additionnels peut être relié au point de combinaison 60 où un point de raccordement 70 situé en aval du point de combinaison 60, comme par exemple montré sur la [Fig.2]. De préférence, chaque fluide porteur additionnel est transféré à l'état gazeux depuis son récipient par un circuit de transfert additionnel respectif comportant une partie aval muni de dispositifs régulateurs de débit 18, 19 additionnels.

Les dispositifs régulateurs de débit permettent de réguler le débit de chaque fluide porteur additionnel respectivement suivant une troisième consigne de débit D3 et une quatrième consigne de débit D4. En aval du point de combinaison 60, ou du point de raccordement 70 le cas échéant, on obtient un mélange des phases gazeuses de chaque fluide avec un débit total qui correspond à la somme des débits de chaque fluide. Le contrôle des débits permet par conséquence de contrôler la concentration de chacun des fluides constituant le mélange de gaz produit.

De préférence, la partie aval additionnelle du circuit de transfert additionnel comportant le ou les dispositifs régulateurs de débit additionnel 18, 19, est aussi chauffée par le deuxième dispositif de chauffage 22, de façon à en stabiliser le fonctionnement, tel qu'exposé précédemment.

Avantageusement, l'ensemble des parties aval des circuits de transfert de fluide de l'installation comprenant des dispositifs régulateurs de débit est chauffé par le deuxième dispositif de chauffage 22. En particulier, l'ensemble de ces systèmes est agencé dans le volume interne défini par l'enveloppe isolante 22a. On chauffe ainsi simultanément les composants de régulation et de distribution de fluide jusqu'au point de combinaison.

Notons que dans le cadre de l'invention, les organes régulateurs de débit peuvent être tout moyen configuré pour régler, réguler, ajuster le débit d'écoulement d'un fluide pour l'amener à une valeur de débit la plus proche de la valeur souhaitée. Typiquement, les organes régulateurs de débit comprennent chacun un capteur de débit, ou débitmètre, associé à un organe de détente, tel une vanne, par exemple une vanne à réglage proportionnel. La vanne peut être pneumatique ou piézoélectrique, analogique ou numérique. La vanne comprend une partie mobile, typiquement au moins un obturateur, qui est placé dans le débit de fluide et dont le déplacement permet de faire varier la section de passage, et ainsi faire varier le débit pour l'amener à la valeur de consigne. En particulier, les organes régulateurs de débit peuvent être des régulateurs de débit massique comprenant un capteur de débit massique et une vanne de contrôle proportionnelle.

Avantageusement, les premiers moyens de chauffage 10 sont configurés pour chauffer le fluide isolant liquéfié dans le premier récipient 1 à une première température, les deuxièmes moyens de chauffage étant configurés pour chauffer la phase vapeur du fluide isolant liquéfié à une deuxième température supérieure à la première température au moins au niveau du point de combinaison 60 et de la partie aval du premier circuit de transfert 6. On évite ainsi tout risque de recondensation de la phase vapeur en aval du premier récipient 1.

De préférence, l'installation selon l'invention peut comprendre l'un ou plusieurs des modes de régulation décrits ci-après.

Selon un premier aspect, les premiers moyens de chauffage 10 sont configurés pour délivrer une puissance de chauffage variable. On peut ainsi ajuster la température de chauffe du fluide isolant liquéfié dans le premier récipient 1. De préférence, l'installation comprend en outre au moins un capteur de pression PC configuré pour mesurer la pression régnant dans le premier récipient 1. Le capteur PC peut être interne ou externe au récipient et/ou être connecté au récipient 1 ou à une canalisation reliée au récipient 1. Une première unité de commande 41 est reliée au capteur de pression PC et aux premiers moyens de chauffage 10. La première unité de commande 41 est configurée pour faire varier la puissance de chauffage délivrée par les premiers moyens de chauffage 10 sur la base de la pression mesurée par le capteur de pression PC.

La puissance de chauffage est ainsi adaptée pour ajuster la température à laquelle le fluide isolant est chauffé dans le premier récipient 1 afin de stabiliser la pression dans le récipient 1. En cas de variation, l'unité de commande adapte les conditions de chauffage par les premiers moyens 10 de façon à ajuster la pression dans le récipient. On assure ainsi une distribution continue avec un débit de phase gazeuse stable. Ce mode de régulation est plus efficace et plus sûr qu'une régulation indépendante des premiers moyens de chauffage puisqu'une variation de pression traduit directement et immédiatement l'état du système physique dans le récipient 1. La régulation de la chauffe par mesure de pression permet d'obtenir une température du fluide isolant très stable dans le premier récipient 1.

Ce mode de réalisation est particulièrement adapté à une distribution du fluide isolant pur puisque la pression dans le récipient 1 correspond à la pression de phase gazeuse et reflète directement la quantité de fluide isolant qui peut être vaporisé.

De préférence, la première unité de commande 41 comprend des moyens de comparaison de la pression dans le premier récipient 1 avec une première pression de consigne, la première unité de commande 41 étant configurée pour réduire la puissance de chauffage lorsque la pression mesurée à l'intérieur du récipient 1 est supérieure ou égale à la première pression de consigne et pour augmenter la puissance de chauffage lorsque la pression dans le récipient 1 est inférieure à la première pression de consigne. Notons que la réduction de la puissance de chauffe s'entend d'un chauffage à une puissance moins élevée ou d'un arrêt du chauffage en fonction de la différence de pression calculée par l'unité de commande 41 entre la consigne de pression et la pression du système mesurée.

La régulation opérée sur la puissance de chauffage des premiers moyens de chauffage en fonction de la pression permet de distribuer un débit optimal de fluide isolant tout en évitant de surchauffer inutilement le premier récipient 1.

Selon une variante (non illustrée), il est envisageable de remplacer le capteur de pression PC par un organe de mesure de température configuré pour mesurer la température d'au moins une portion de la surface extérieure d'une paroi du récipient 1, i. e. la température de peau du récipient 1. La régulation de la chauffe des premiers moyens de chauffage 10 se fait ainsi en fonction de cette température. L'organe de mesure de température peut être tout organe configuré pour réaliser des mesures de température par contact, en particulier un capteur de température par résistance, par exemple un capteur à résistance de platine du type PT100, ou bien une sonde de température à thermocouple ou à thermistance.

La première unité de commande 41 est reliée à l'organe de mesure de température de température et aux premiers moyens de chauffage 10. La première unité de commande 41 est configurée pour faire varier la puissance de chauffage délivrée par les premiers moyens de chauffage 10 en fonction de la température mesurée.

Avantageusement, la première unité de commande 41 comprend des moyens de comparaison de la température mesurée par l'organe de mesure de température avec une première température de consigne d'une valeur prédéterminée. L'unité de commande 41 est configurée pour réduire la puissance de chauffage lorsque la température mesurée est supérieure à la première température de consigne et pour augmenter la puissance de chauffage lorsque la température mesurée est inférieure à la première température de consigne. Notons que la réduction de la puissance de chauffe s'entend d'un chauffage à une puissance moins élevée ou d'un arrêt du chauffage en fonction de la différence de pression calculée par l'unité de commande 41 entre la consigne de température et la température du système mesurée.

Selon un deuxième aspect, les deuxièmes moyens de chauffage sont configurés pour délivrer une puissance de chauffage variable. On peut ainsi ajuster la température de chauffe des vapeurs de fluide isolant liquéfié dans le circuit de transfert 6 et au niveau du point de combinaison 60. De préférence, la puissance de chauffage des deuxièmes moyens de chauffage peut être ajustée et/ou régulée sur la base d'une mesure de la température au niveau du premier dispositif chauffant 21 et/ou deuxième dispositif chauffant 22. Le premier dispositif chauffant 21 et/ou le deuxième dispositif chauffant 22 peuvent ainsi présenter un ou plusieurs capteurs de température TC. Notons qu'il est aussi envisageable de positionner des capteurs de température TC dans d'autres zones, notamment dans le volume interne chauffé par le deuxième dispositif chauffant 22.

Une troisième unité de commande 43 est reliée à ou aux capteurs de température TC et aux deuxièmes moyens de chauffage. La troisième unité de commande 41 est configurée pour faire varier la puissance de chauffage délivrée par les deuxièmes moyens de chauffage sur la base de la température mesurée par le capteur de température TC. La puissance de chauffage peut ainsi être ajustée pour faire varier la température à laquelle le fluide isolant est chauffé dans au niveau du premier circuit de transfert 6 et du point de combinaison 60. La [Fig.1] schématise une commande commune de la puissance de chauffage du premier dispositif chauffant 21 et du deuxième dispositif chauffant 22. Il est aussi possible de commander de façon indépendante la puissance de chauffage du premier dispositif chauffant 21 et du deuxième dispositif chauffant 22.

La troisième unité de commande 43 comprend des moyens de comparaison de la température mesurée par au moins un capteur de température avec au moins une deuxième température de consigne. La troisième unité de commande 43 est configurée pour réduire la puissance de chauffage lorsque la température mesurée est supérieure ou égale à la deuxième température de consigne et pour augmenter la puissance de chauffage lorsque température mesurée est inférieure à la deuxième température de consigne. Notons que la puissance de chauffage du premier dispositif chauffant 21 et la puissance de chauffage du deuxième dispositif chauffant 22 peuvent être régulées suivant une même température de consigne ou suivant des températures de consigne distinctes.

Avantageusement, la troisième unité de commande 43 comprend une première boucle de régulation de la puissance de chauffage des deuxièmes moyens de chauffage sur la deuxième température de consigne. La boucle de régulation détermine régulièrement l'écart entre la température mesurée et la deuxième température de consigne que l'on désire maintenir, et calcule la commande appropriée à appliquer à un ou plusieurs actionneurs de façon à réduire cet écart le plus rapidement possible. La boucle de régulation fonctionne en boucle fermée.

De préférence, la première boucle de régulation comprend un premier comparateur configuré pour élaborer au moins un premier signal d'erreur obtenu par comparaison entre une température mesurée et la deuxième température de consigne. La première boucle comprend un premier correcteur configuré pour élaborer un premier signal de commande à partir du premier signal d'erreur et pour envoyer ledit signal de commande à des actionneurs qui commandent un ajustement, en réponse au premier signal de commande, de la puissance des deuxièmes moyens de chauffage. De préférence, le premier correcteur est du type proportionnel, intégral et dérivé (PID).

Selon un troisième aspect, dans le cas où l'installation comprend des troisièmes moyens de chauffage 30 configurés pour chauffer le fluide porteur liquéfié dans le deuxième récipient 2, lesdits troisièmes moyens 30 peuvent être configurés pour délivrer une puissance de chauffage variable. On peut ainsi ajuster la température de chauffe du fluide isolant liquéfié dans le deuxième récipient 2. De préférence, l'installation comprend en outre au moins un autre capteur de pression PC configuré pour mesurer la pression régnant dans le premier récipient 2. Le capteur PC peut être interne ou externe au récipient et/ou être connecté au récipient 2 ou à une canalisation reliée au récipient 2. Sur la [Fig.1], on a représenté la première unité de commande 41 reliée à l'autre capteur de pression PC et aux troisièmes moyens de chauffage 30. La première unité de commande 41 est configurée pour faire varier la puissance de chauffage délivrée par les moyens 30 sur la base de la pression mesurée par le l'autre capteur PC. La régulation de la chauffe du deuxième récipient 2 peut aussi être réalisée par une unité de commande indépendante. Notons que tout ou partie des caractéristiques et avantages décrits en lien avec les premiers moyens de chauffage sont applicables à la régulation des troisièmes moyens de chauffage.

Selon une variante (non illustrée), la régulation de la chauffe des moyens 30 par mesure de pression telle que décrite ci-dessus peut être remplacée par une régulation par mesure de la température externe du deuxième récipient 2, i. e. la température de peau du deuxième récipient 2. Notons que tout ou partie des caractéristiques décrites pour la régulation des premiers moyens de chauffage par mesure de température sont applicables à ce mode de régulation des troisièmes moyens de chauffage.

Selon un quatrième aspect, l'installation comprend une deuxième unité de commande 42 qui est reliée au premier et au second dispositif régulateur de débit, respectivement 61 et 13, de façon à commander leurs fonctionnements conformément aux consignes de débits D1 et D2 souhaitées. Les deux dispositifs régulateurs de débits 61 et 13 comprend avantageusement un système à boucle fermée qui reçoit les consignes de débit D1 et D2 de l'unité de commande 42. Les dispositifs régulateurs de débit 61 et 13 comprennent chacun au moins un capteur de débit qui mesure le débit de fluide. Le système à boucle fermée compare les débits mesurés avec les consignes respectives de débit. Les positions des dispositifs sont ajustées par ledit système en conséquence pour maintenir les débits le plus proche possible de D1 et D2 vers le point de combinaison 60. De préférence, la boucle de régulation de débit est du type PID.

Avantageusement, la ou les unités de commande 41, 42, 43 comprennent un automate programmable, également appelé système « PLC » pour « Programmable Logic Controller » en anglais, c'est-à-dire un système de contrôle d'un procédé industriel comprenant une interface homme-machine pour la supervision et un réseau de communication numérique. La ou les unités de commande 41, 42, 43 peuvent ainsi comprendre au moins l'un parmi : un microcontrôleur, un microprocesseur, un ordinateur. La ou les unités de commande 41, 42, 43 peuvent être reliées aux différents équipements de contrôle de l'installation, notamment aux organes régulateurs de débit, capteurs, et communiquer avec lesdits équipements par des liaisons électriques, Ethernet, Modbus... et/ou par liaisons radiofréquence, WIFI, Bluetooth... Eventuellement, les unités de commande 41, 42, 43 peuvent former une même entité.

Comme on le voit sur la [Fig.1], le deuxième circuit de transfert 7 peut comprendre au moins un organe de détente 5 configuré pour réduire la pression de la phase gazeuse du fluide porteur. Cela permet un fonctionnement du deuxième dispositif régulateur de débit 13 à une pression acceptable par celui-ci. De préférence, un réchauffeur 11 est agencé en amont de l'organe de détente 5 de façon à chauffer la phase gazeuse avant sa détente par l'organe de détente 5. Cela permet de compenser le refroidissement causé par l'effet Joule-Thomson lors de l'expansion adiabatique du gaz. Notons que deux organes de détente peuvent éventuellement être agencés en série, avec éventuellement un autre réchauffeur agencé entre deux organes de détente. Au moins un réchauffeur et au moins un détendeur peuvent également être agencés sur les circuits de transfert additionnels le cas échéant.

Le circuit de distribution 8 comprend avantageusement un dispositif mélangeur 50 configuré pour mélanger et homogénéiser la phase gazeuse du fluide isolant et la phase gazeuse du fluide porteur combinées en amont. On pourra par exemple utiliser un mélangeur du type mélangeur statique permettant un mélange en continu des fluides entrant dans le mélangeur. Ce type de mélangeur comprend généralement au moins un élément perturbateur, telle une plaque, une portion de tuyau, un insert, apte à perturber l'écoulement des fluides, et à générer un écoulement turbulent et non plus laminaire pour favoriser le mélange des fluides et son homogénéisation.

Selon une variante illustrée sur la [Fig.2], le dispositif mélangeur 50 peut éventuellement comprendre deux organes mélangeurs 51, 52 distincts. De cette façon, une combinaison des phases gazeuses du fluide isolant et du fluide porteur a d'abord lieu au point de combinaison 60. Un mélange intermédiaire de ces phases est produit en sortie du premier organe mélangeur 51. Le fluide porteur issu du récipient 3 est combiné avec le mélange intermédiaire au point de raccordement 70 puis est mélangé avec le mélange intermédiaire dans le deuxième organe mélangeur 52. Ainsi, le fluide porteur additionnel n'est combiné avec le fluide isolant que lorsque ce dernier a déjà été dilué avec le fluide porteur, ce qui améliore la sécurité de l'installation lorsque le fluide porteur est de l'oxygène.

En sortie du dispositif mélangeur 50, le mélange gazeux isolant peut avoir une première pression allant de 2,5 à 1 bar absolus.

De préférence, un organe élévateur de pression 53 tel un compresseur à un ou plusieurs étages, est agencé en aval du dispositif mélangeur 50. Ainsi, une fois le mélange gazeux réalisé avec la composition souhaitée, on élève sa pression à la pression de remplissage de l'appareillage électrique. Typiquement, le mélange peut présenter une deuxième pression allant de 2,5 à 11 bar absolus à la sortie de l'organe élévateur de pression 53.

Le circuit de distribution 8 peut comprendre un réservoir tampon 12 agencé en amont de l'organe élévateur de pression 53. Cela permet de lisser d'éventuelles fluctuations de débit avant élévation de la pression du fluide. Le réservoir tampon 12 permet aussi de compléter l'homogénéisation du mélange. Le réservoir tampon 12 peut être formé d'un réservoir unique ou de plusieurs réservoirs reliés fluidiquement entre eux.

Le circuit de distribution 8 peut comprendre une dérivation vers un point d'évacuation et/ou de retraitement 91 du mélange gazeux. Cela permet d'opérer des purges du circuit de fluide, par exemple après une séquence de remplissage et avant le début de la séquence suivante. L'installation peut comprendre en outre un point de prélèvement 92 du mélange destiné à être relié à une unité d'analyse configurée pour analyser au moins une teneur en le fluide isolant et/ou le fluide porteur du mélange distribué. Cela permet, au démarrage de l'installation ou bien au cours d'une séquence de remplissage, de vérifier la conformité du mélange de gaz avec les teneurs cibles. Si le mélange produit n'est pas conforme, la distribution peut éventuellement être stoppée. Le circuit de distribution 8 peut comprendre des moyens de basculement automatique pour alimenter sélectivement le point de distribution 90, le point d'évacuation 91 ou le point de prélèvement 92.

L'installation selon l'invention permet de distribuer un mélange gazeux diélectrique avec une stabilité et une précision de réalisation améliorées. La composition du mélange peut être aisément adaptée aux spécifications requises. Le mélange gazeux peut contenir au moins un fluide isolant habituellement utilisé pour l'isolation gazeuse des appareillages électrique à haute tension. Rappelons que le mélange gazeux isolant contient un fluide porteur et optionnellement au moins un fluide porteur additionnel.

De préférence, ledit mélange gazeux isolant présente un PRG égal ou inférieur à 1000, c'est-à-dire au plus 1000 fois plus élevé que celui du CO₂, voire inférieur ou égal à 500. Un fluide porteur et au moins un éventuel fluide porteur additionnel peuvent être utilisés en mélange avec le fluide isolant. Typiquement, le mélange gazeux peut comprendre de 2 à 15 % (% molaire) de fluide isolant, de 65 à 98 % de fluide porteur, de 3 à 20 % d'au moins un éventuel fluide porteur additionnel tel que l'oxygène.

Considérons l'exemple d'une installation configurée pour produire un mélange à trois gaz avec un débit de distribution de 100 sL/min. Le mélange de gaz souhaité est un mélange formé de perfluoronitrile en tant que fluide isolant avec une teneur cible C1 de 5% (% molaire), de CO₂ en tant que fluide porteur avec une teneur C2 de 85% et 10% d'oxygène en tant que fluide porteur additionnel, Une première consigne de débit D1 de 5 sL/min, une deuxième consigne D2 de 85 sL/min, et une troisième consigne de débit D3 de 10 sL/m sont appliquées aux dispositifs régulateurs de débit respectifs.

## Revendications

1. Installation de distribution d'un mélange gazeux isolant électrique vers un appareillage électrique à isolation gazeuse, en particulier un appareillage électrique haute tension, ladite installation comprenant :
- un premier récipient (1) destiné à contenir un fluide isolant à l'état liquide ou liquéfié,
- des premiers moyens de chauffage (10) configurés pour chauffer le fluide isolant dans le premier récipient (1) de sorte que ledit premier récipient (1) produit à une première sortie une phase gazeuse du fluide isolant,
- un deuxième récipient (2) destiné à contenir un fluide porteur et configuré pour produire une phase gazeuse du fluide porteur à une deuxième sortie du deuxième récipient (2),
- un premier circuit de transfert (6) configuré pour transférer la phase gazeuse du fluide isolant depuis la première sortie du premier récipient (1) jusqu'à un point de combinaison (60), le premier circuit de transfert (6) comprenant une première partie amont (6a) reliée au premier récipient (1) et une première partie aval (6b) reliée d'une part à la première partie amont (6a) et d'autre part au point de combinaison (60),
- un deuxième circuit de transfert (7) configuré pour transférer la phase gazeuse du fluide porteur depuis la deuxième sortie du deuxième récipient (2) jusqu'au point de combinaison (60),
- un circuit de distribution (8) relié fluidiquement au point de combinaison (60) et configuré pour distribuer un mélange gazeux isolant électrique comprenant la phase gazeuse du fluide isolant et la phase gazeuse du fluide porteur vers l'appareillage électrique à haute tension,
l'installation de distribution étant **caractérisée en ce que**:
- la première partie aval (6b) du premier circuit de transfert (6) comprend un premier dispositif régulateur de débit (61) configuré pour réguler et/ou ajuster le débit de phase gazeuse du fluide isolant s'écoulant vers le point de combinaison (60),
- ladite installation comprend en outre des deuxièmes moyens de chauffage (21, 22) configurés pour chauffer la phase gazeuse du fluide isolant au moins au niveau du point de combinaison (60) et de la partie aval (6b) du premier circuit de transfert (6).

2. Installation selon la revendication précédente, **caractérisée en ce que** les deuxièmes moyens de chauffage (21, 22) sont en outre configurés pour chauffer la phase gazeuse du fluide isolant au niveau d'au moins une portion de la première partie amont (6a) du premier circuit de transfert (6).

3. Installation selon l'une des revendications précédentes, **caractérisée en ce que** la première partie amont (6a) du circuit de transfert (6) comprend au moins une conduite de fluide (6a), les deuxièmes moyens de chauffage (21, 22) comprenant un premier dispositif chauffant (21) agencé autour de tout ou partie de ladite conduite de fluide (6a), en particulier le premier dispositif chauffant (21) est du type résistif ou inductif.

4. Installation selon l'une des revendications précédentes, **caractérisée en ce que** les deuxièmes moyens de chauffage (21, 22) comprennent un deuxième dispositif chauffant (22) agencé autour du point de combinaison (60) et de la première partie aval (6b) du premier circuit de transfert (6).

5. Installation selon la revendication précédente, **caractérisée en ce que** le deuxième dispositif chauffant (22) comprend une enveloppe thermiquement isolante (22a) définissant un volume interne dans lequel la partie aval du premier circuit de transfert (6), le premier dispositif régulateur de débit (61), et le point de combinaison (60) sont agencés, et un organe chauffant (22b) adapté à chauffer ledit volume interne, en particulier l'organe chauffant (22b) est du type résistif.

6. Installation selon la revendication précédente, **caractérisée en ce que** l'enveloppe thermiquement isolante (22a) comprend au moins une couche d'un matériau souple, en particulier le matériau souple comprend au moins une toile tissée de fils formés d'un matériau thermiquement isolant ou un non-tissé de fibres formés d'un matériau thermiquement isolant.

7. Installation selon l'une des revendications 5 ou 6, **caractérisée en ce que** l'enveloppe thermiquement isolante est formée de plusieurs panneaux reliés entre eux par des moyens de fixation amovibles.

8. Installation selon l'une des revendications précédentes, **caractérisée en ce que** le deuxième circuit de transfert (7) comprend une deuxième partie amont (7a) reliée au deuxième récipient (2) et une deuxième partie aval (7b) reliée au point de combinaison (60), ladite deuxième partie aval (7b) comportant un deuxième dispositif régulateur de débit (13) configuré pour réguler et/ou ajuster le débit de phase gazeuse du fluide porteur s'écoulant vers le point de combinaison (60), le deuxième dispositif chauffant (22) étant de préférence configuré pour chauffer la deuxième partie aval (7b) du deuxième circuit de transfert (7).

9. Installation selon l'une des revendications précédentes, **caractérisée en ce qu'**elle comprend en outre au moins un récipient additionnel (3, 4) destiné à contenir un fluide porteur additionnel et configuré pour produire une phase gazeuse dudit fluide porteur additionnel à une sortie du récipient additionnel (3, 4), l'installation comprenant un circuit de transfert additionnel configuré pour transférer la phase gazeuse du fluide porteur additionnel depuis la sortie du récipient additionnel (3, 4) jusqu'au point de combinaison (60), le circuit de transfert additionnel comprenant une partie amont additionnelle reliée au récipient additionnel (3, 4) et une partie aval additionnelle reliée au point de combinaison (60), ladite partie aval additionnelle comportant un dispositif régulateur de débit additionnel (18, 19) configuré pour réguler et/ou ajuster le débit de phase gazeuse du fluide porteur additionnel s'écoulant vers le point de combinaison (60), le deuxième dispositif de chauffage (22) étant de préférence configuré pour chauffer la partie aval additionnelle du circuit de transfert additionnel.

10. Installation selon l'une des revendications précédentes, **caractérisée en ce que** les premiers moyens de chauffage (10) sont configurés pour chauffer le fluide isolant liquéfié dans le premier récipient (1) à une première température, les deuxièmes moyens de chauffage (21, 22) étant configurés pour chauffer la phase vapeur du fluide isolant liquéfié à une deuxième température supérieure à la première température au moins au niveau du point de combinaison (60) et de tout ou partie du premier circuit de transfert (6).

11. Installation selon l'une des revendications précédentes, **caractérisée en ce que** les premiers moyens de chauffage (10) sont configurés pour délivrer une puissance de chauffage variable, l'installation comprenant au moins un capteur de pression (PC) configuré pour mesurer la pression régnant dans le premier récipient (1) et une première unité de commande (41) reliée au capteur de pression (PC) et aux premiers moyens de chauffage (10), la première unité de commande (41) étant configurée pour faire varier la puissance de chauffage délivrée par les premiers moyens de chauffage (10) en fonction de la pression mesurée par le capteur de pression (PC).

12. Installation selon l'une des revendications 1 à 10, **caractérisée en ce que** les premiers moyens de chauffage (10) sont configurés pour délivrer une puissance de chauffage variable, l'installation comprenant au moins un organe de mesure de température configuré pour mesurer la température du premier récipient (1) et une première unité de commande (41) reliée à l'organe de mesure de température et aux premiers moyens de chauffage (10), la première unité de commande (41) étant configurée pour faire varier la puissance de chauffage délivrée par les premiers moyens de chauffage (10) en fonction de la température mesurée par l'organe de mesure de température.

13. Installation selon l'une des revendications précédentes, **caractérisée en ce que** le deuxième récipient (2) est destiné à contenir le fluide porteur sous forme liquéfiée, l'installation comprenant des troisièmes moyens de chauffage (30) configuré pour chauffer le fluide porteur liquéfié dans le deuxième récipient (2) de façon à vaporiser au moins une partie du fluide porteur liquéfié et à distribuer une phase gazeuse du fluide porteur dans le deuxième circuit de transfert (7).

14. Installation selon l'une des revendications précédentes, **caractérisée en ce que** le deuxième circuit de transfert (7) comprend un organe de détente (5) configuré pour réduire la pression de la phase gazeuse du fluide porteur, un réchauffeur (11) agencé en amont de l'organe de détente (5) de façon à chauffer la phase gazeuse avant sa détente par l'organe de détente (5).

15. Installation selon l'une des revendications précédentes, **caractérisée en ce que** le circuit de distribution (8) comprend au moins l'un parmi : un dispositif mélangeur (50) configuré pour mélanger la phase gazeuse du fluide isolant et la phase gazeuse du fluide porteur, un organe élévateur de pression (53) agencé en aval du dispositif mélangeur (50), un réservoir tampon (12) agencé en amont de l'organe élévateur de pression (53).

16. Procédé de distribution d'un mélange gazeux isolant électrique vers un appareillage électrique à haute tension, ledit procédé comprenant les étapes suivantes :
- a) chauffage d'un fluide isolant à l'état liquide ou liquéfié dans un premier récipient (1) par des premiers moyens de chauffage (10) de façon à vaporiser au moins une partie du fluide isolant liquéfié et à produire une phase gazeuse du fluide isolant dans le premier récipient (1),
- b) passage de la phase gazeuse du fluide isolant dans un premier circuit de transfert (6) de façon à transférer la phase gazeuse du fluide isolant depuis le premier récipient (1) jusqu'à un point de combinaison (60), le premier circuit de transfert (6) comprenant une première partie amont (6a) reliée au premier récipient (1) et une première partie aval (6b) reliée d'une part à la première partie amont (6a) et d'autre part au point de combinaison (60),
- c) régulation et/ou ajustement du débit de phase gazeuse du fluide isolant s'écoulant vers le point de combinaison (60) au moyen d'un premier dispositif régulateur de débit (61) agencé sur la première partie aval du premier circuit de transfert (6),
- d) passage d'une phase gazeuse d'un fluide porteur depuis un deuxième récipient (2) dans un deuxième circuit de transfert (7) de façon à transférer la phase gazeuse du fluide porteur jusqu'au point de combinaison (60),
- e) combinaison de la phase gazeuse du fluide isolant et de la phase gazeuse du fluide porteur au point de combinaison (60) et passage de la phase gazeuse du fluide isolant et de la phase gazeuse du fluide porteur combinées dans un circuit de distribution (8) adapté à distribuer vers l'appareillage électrique à haute tension un mélange gazeux isolant électrique comprenant la phase gazeuse du fluide isolant et la phase gazeuse du fluide porteur,
- f) chauffage de la phase gazeuse du fluide isolant au moins au niveau du point du point de combinaison (60) et de la partie aval (6b) du premier circuit de transfert (6) par des deuxièmes moyens de chauffage (21, 22).

## Patentansprüche

1. Einrichtung zur Verteilung eines elektrisch isolierenden Gasgemisches an eine gasisolierte elektrische Schaltanlage, insbesondere eine elektrische Hochspannungsschaltanlage, wobei die Einrichtung umfasst:
- einen ersten Behälter (1), der dazu bestimmt ist, ein Isolierfluid im flüssigen oder verflüssigten Zustand zu enthalten,
- erste Heizmittel (10), die konfiguriert sind, um das Isolierfluid in dem ersten Behälter (1) zu erhitzen, so dass der erste Behälter (1) an einem ersten Ausgang eine gasförmige Phase des Isolierfluids erzeugt,
- einen zweiten Behälter (2), der dazu bestimmt ist, ein Trägerfluid zu enthalten, und konfiguriert ist, um eine gasförmige Phase des Trägerfluids an einem zweiten Ausgang des zweiten Behälters (2) zu erzeugen,
- einen ersten Übertragungskreislauf (6), der konfiguriert ist, um die gasförmige Phase des Isolierfluids vom ersten Ausgang des ersten Behälters (1) zu einem Kombinationspunkt (60) zu übertragen, wobei der erste Übertragungskreislauf (6) einen ersten stromaufwärtigen Teil (6a), der mit dem ersten Behälter (1) verbunden ist, und einen ersten stromabwärtigen Teil (6b) umfasst, der einerseits mit dem ersten stromaufwärtigen Teil (6a) und andererseits mit dem Kombinationspunkt (60) verbunden ist,
- einen zweiten Übertragungskreislauf (7), der konfiguriert ist, um die gasförmige Phase des Trägerfluids vom zweiten Ausgang des zweiten Behälters (2) zum Kombinationspunkt (60) zu übertragen,
- einen Verteilerkreislauf (8), der fluidisch mit dem Kombinationspunkt (60) verbunden und konfiguriert ist, um ein elektrisch isolierendes Gasgemisch, das die gasförmige Phase des Isolierfluids und die gasförmige Phase des Trägerfluids umfasst, an die elektrische Hochspannungsschaltanlage zu verteilen,
wobei die Verteilungseinrichtung **dadurch gekennzeichnet ist, dass**:
der erste stromabwärtige Teil (6b) des ersten Übertragungskreislaufs (6) eine erste Durchflussregelvorrichtung (61) umfasst, die konfiguriert ist, um den Durchfluss der gasförmigen Phase des zum Kombinationspunkt (60) strömenden Isolierfluids zu regeln und/oder einzustellen,
die Einrichtung ferner zweite Heizmittel (21, 22) umfasst, die konfiguriert sind, um die gasförmige Phase des Isolierfluids mindestens auf Höhe des Kombinationspunktes (60) und des stromabwärtigen Teils (6b) des ersten Übertragungskreislaufs (6) zu erhitzen.

2. Einrichtung nach dem vorhergehenden Anspruch, **dadurch gekennzeichnet, dass** die zweiten Heizmittel (21, 22) ferner konfiguriert sind, um die gasförmige Phase des Isolierfluids auf Höhe mindestens eines Abschnitts des ersten stromaufwärtigen Teils (6a) des ersten Übertragungskreislaufs (6) zu erhitzen.

3. Einrichtung nach einem der vorhergehenden Ansprüche, **dadurch gekennzeichnet, dass** der erste stromaufwärtige Teil (6a) des Übertragungskreislaufs (6) mindestens eine Fluidleitung (6a) umfasst, wobei die zweiten Heizmittel (21, 22) eine erste Heizvorrichtung (21) umfassen, die um die gesamte oder einen Teil der Fluidleitung (6a) angeordnet ist, insbesondere ist die erste Heizvorrichtung (21) vom resistiven oder induktiven Typ.

4. Einrichtung nach einem der vorhergehenden Ansprüche, **dadurch gekennzeichnet, dass** die zweiten Heizmittel (21, 22) eine zweite Heizvorrichtung (22) umfassen, die um den Kombinationspunkt (60) und den ersten stromabwärtigen Teil (6b) des ersten Übertragungskreislaufs (6) angeordnet ist.

5. Einrichtung nach dem vorhergehenden Anspruch, **dadurch gekennzeichnet, dass** die zweite Heizvorrichtung (22) eine wärmeisolierende Hülle (22a) umfasst, die ein Innenvolumen definiert, in dem der stromabwärtige Teil des ersten Übertragungskreislaufs (6), die erste Durchflussregelvorrichtung (61) und der Kombinationspunkt (60) angeordnet sind, und ein Heizorgan (22b), das zum Erhitzen des Innenvolumens geeignet ist, insbesondere ist das Heizorgan (22b) vom resistiven Typ.

6. Einrichtung nach dem vorhergehenden Anspruch, **dadurch gekennzeichnet, dass** die wärmeisolierende Hülle (22a) mindestens eine Schicht aus einem flexiblen Material umfasst, insbesondere umfasst das flexible Material mindestens ein Gewebe aus Fäden, die aus einem wärmeisolierenden Material gebildet sind, oder ein Vlies aus Fasern, die aus einem wärmeisolierenden Material gebildet sind.

7. Einrichtung nach einem der Ansprüche 5 oder 6, **dadurch gekennzeichnet, dass** die wärmeisolierende Hülle aus mehreren Paneelen gebildet ist, die durch abnehmbare Befestigungsmittel miteinander verbunden sind.

8. Einrichtung nach einem der vorhergehenden Ansprüche, **dadurch gekennzeichnet, dass** der zweite Übertragungskreislauf (7) einen zweiten stromaufwärtigen Teil (7a), der mit dem zweiten Behälter (2) verbunden ist, und einen zweiten stromabwärtigen Teil (7b) umfasst, der mit dem Kombinationspunkt (60) verbunden ist, wobei der zweite stromabwärtige Teil (7b) eine zweite Durchflussregelvorrichtung (13) aufweist, die konfiguriert ist, um den Durchfluss der gasförmigen Phase des zum Kombinationspunkt (60) strömenden Trägerfluids zu regeln und/oder einzustellen, wobei die zweite Heizvorrichtung (22) vorzugsweise konfiguriert ist, um den zweiten stromabwärtigen Teil (7b) des zweiten Übertragungskreislaufs (7) zu erhitzen.

9. Einrichtung nach einem der vorhergehenden Ansprüche, **dadurch gekennzeichnet, dass** sie ferner mindestens einen zusätzlichen Behälter (3, 4) umfasst, der dazu bestimmt ist, ein zusätzliches Trägerfluid zu enthalten, und konfiguriert ist, um eine gasförmige Phase des zusätzlichen Trägerfluids an einem Ausgang des zusätzlichen Behälters (3, 4) zu erzeugen, wobei die Einrichtung einen zusätzlichen Übertragungskreislauf umfasst, der konfiguriert ist, um die gasförmige Phase des zusätzlichen Trägerfluids vom Ausgang des zusätzlichen Behälters (3, 4) zum Kombinationspunkt (60) zu übertragen, wobei der zusätzliche Übertragungskreislauf einen zusätzlichen stromaufwärtigen Teil, der mit dem zusätzlichen Behälter (3, 4) verbunden ist, und einen zusätzlichen stromabwärtigen Teil umfasst, der mit dem Kombinationspunkt (60) verbunden ist, wobei der zusätzliche stromabwärtige Teil eine zusätzliche Durchflussregelvorrichtung (18, 19) aufweist, die konfiguriert ist, um den Durchfluss der gasförmigen Phase des zum Kombinationspunkt (60) strömenden zusätzlichen Trägerfluids zu regeln und/oder einzustellen, wobei die zweite Heizvorrichtung (22) vorzugsweise konfiguriert ist, um den zusätzlichen stromabwärtigen Teil des zusätzlichen Übertragungskreislaufs zu erhitzen.

10. Einrichtung nach einem der vorhergehenden Ansprüche, **dadurch gekennzeichnet, dass** die ersten Heizmittel (10) konfiguriert sind, um das verflüssigte Isolierfluid im ersten Behälter (1) auf eine erste Temperatur zu erhitzen, wobei die zweiten Heizmittel (21, 22) konfiguriert sind, um die Dampfphase des verflüssigten Isolierfluids auf eine zweite Temperatur zu erhitzen, die höher als die erste Temperatur ist, zumindest auf Höhe des Kombinationspunktes (60) und des gesamten oder eines Teils des ersten Übertragungskreislaufs (6).

11. Einrichtung nach einem der vorhergehenden Ansprüche, **dadurch gekennzeichnet, dass** die ersten Heizmittel (10) konfiguriert sind, um eine variable Heizleistung zu liefern, wobei die Einrichtung mindestens einen Drucksensor (PC), der konfiguriert ist, um den im ersten Behälter (1) herrschenden Druck zu messen, und eine erste Steuereinheit (41) umfasst, die mit dem Drucksensor (PC) und den ersten Heizmitteln (10) verbunden ist, wobei die erste Steuereinheit (41) konfiguriert ist, um die von den ersten Heizmitteln (10) gelieferte Heizleistung in Abhängigkeit von dem vom Drucksensor (PC) gemessenen Druck zu variieren.

12. Einrichtung nach einem der Ansprüche 1 bis 10, **dadurch gekennzeichnet, dass** die ersten Heizmittel (10) konfiguriert sind, um eine variable Heizleistung zu liefern, wobei die Einrichtung mindestens ein Temperaturmessorgan, das konfiguriert ist, um die Temperatur des ersten Behälters (1) zu messen, und eine erste Steuereinheit (41) umfasst, die mit dem Temperaturmessorgan und den ersten Heizmitteln (10) verbunden ist, wobei die erste Steuereinheit (41) konfiguriert ist, um die von den ersten Heizmitteln (10) gelieferte Heizleistung in Abhängigkeit von der vom Temperaturmessorgan gemessenen Temperatur zu variieren.

13. Einrichtung nach einem der vorhergehenden Ansprüche, **dadurch gekennzeichnet, dass** der zweite Behälter (2) dazu bestimmt ist, das Trägerfluid in verflüssigter Form zu enthalten, wobei die Einrichtung dritte Heizmittel (30) umfasst, die konfiguriert sind, um das verflüssigte Trägerfluid in dem zweiten Behälter (2) zu erhitzen, um mindestens einen Teil des verflüssigten Trägerfluids zu verdampfen und eine gasförmige Phase des Trägerfluids in den zweiten Übertragungskreislauf (7) zu verteilen.

14. Einrichtung nach einem der vorhergehenden Ansprüche, **dadurch gekennzeichnet, dass** der zweite Übertragungskreislauf (7) ein Entspannungsorgan (5), das konfiguriert ist, um den Druck der gasförmigen Phase des Trägerfluids zu reduzieren, und einen Nacherhitzer (11) umfasst, der stromaufwärts des Entspannungsorgans (5) angeordnet ist, um die gasförmige Phase vor ihrer Entspannung durch das Entspannungsorgan (5) zu erhitzen.

15. Einrichtung nach einem der vorhergehenden Ansprüche, **dadurch gekennzeichnet, dass** der Verteilerkreislauf (8) mindestens eines der folgenden Elemente umfasst: eine Mischvorrichtung (50), die konfiguriert ist, um die gasförmige Phase des Isolierfluids und die gasförmige Phase des Trägerfluids zu mischen, ein Druckerhöhungsorgan (53), das stromabwärts der Mischvorrichtung (50) angeordnet ist, einen Pufferspeicher (12), der stromaufwärts des Druckerhöhungsorgans (53) angeordnet ist.

16. Ein Verfahren zur Verteilung eines elektrisch isolierenden Gasgemisches an eine elektrische Hochspannungsschaltanlage, wobei das Verfahren die folgenden Schritte umfasst:
- a) Erhitzen eines Isolierfluids im flüssigen oder verflüssigten Zustand in einem ersten Behälter (1) durch erste Heizmittel (10), um mindestens einen Teil des verflüssigten Isolierfluids zu verdampfen und eine gasförmige Phase des Isolierfluids im ersten Behälter (1) zu erzeugen,
- b) Leiten der gasförmigen Phase des Isolierfluids in einen ersten Übertragungskreislauf (6), um die gasförmige Phase des Isolierfluids vom ersten Behälter (1) zu einem Kombinationspunkt (60) zu übertragen, wobei der erste Übertragungskreislauf (6) einen ersten stromaufwärtigen Teil (6a), der mit dem ersten Behälter (1) verbunden ist, und einen ersten stromabwärtigen Teil (6b) umfasst, der einerseits mit dem ersten stromaufwärtigen Teil (6a) und andererseits mit dem Kombinationspunkt (60) verbunden ist,
- c) Regeln und/oder Einstellen des Durchflusses der gasförmigen Phase des zum Kombinationspunkt (60) strömenden Isolierfluids mittels einer ersten Durchflussregelvorrichtung (61), die am ersten stromabwärtigen Teil des ersten Übertragungskreislaufs (6) angeordnet ist,
- d) Leiten einer gasförmigen Phase eines Trägerfluids aus einem zweiten Behälter (2) in einen zweiten Übertragungskreislauf (7), um die gasförmige Phase des Trägerfluids zum Kombinationspunkt (60) zu übertragen,
- e) Kombinieren der gasförmigen Phase des Isolierfluids und der gasförmigen Phase des Trägerfluids am Kombinationspunkt (60) und Leiten der kombinierten gasförmigen Phase des Isolierfluids und der gasförmigen Phase des Trägerfluids in einem Verteilerkreislauf (8), der geeignet ist, ein elektrisch isolierendes Gasgemisch, das die gasförmige Phase des Isolierfluids und die gasförmige Phase des Trägerfluids umfasst, an die elektrische Hochspannungsschaltanlage zu verteilen,
- f) Erhitzen der gasförmigen Phase des Isolierfluids mindestens auf Höhe des Kombinationspunktes (60) und des stromabwärtigen Teils (6b) des ersten Übertragungskreislaufs (6) durch zweite Heizmittel (21, 22).

## Claims

1. An installation for distributing an electrical insulating gas mixture to a gas-insulated electrical switchgear, in particular a high-voltage electrical switchgear, said installation comprising:
- a first container (1) intended to contain an insulating fluid in the liquid or liquefied state,
- first heating means (10) configured to heat the insulating fluid in the first container (1) so that said first container (1) produces at a first outlet a gaseous phase of the insulating fluid,
- a second container (2) intended to contain a carrier fluid and configured to produce a gaseous phase of the carrier fluid at a second outlet of the second container (2),
- a first transfer circuit (6) configured to transfer the gaseous phase of the insulating fluid from the first outlet of the first container (1) to a combination point (60), the first transfer circuit (6) comprising a first upstream part (6a) connected to the first container (1) and a first downstream part (6b) connected on the one hand to the first upstream part (6a) and on the other hand to the combination point (60),
- a second transfer circuit (7) configured to transfer the gaseous phase of the carrier fluid from the second outlet of the second container (2) to the combination point (60),
- a distribution circuit (8) fluidically connected to the combination point (60) and configured to distribute an electrical insulating gas mixture comprising the gaseous phase of the insulating fluid and the gaseous phase of the carrier fluid to the high-voltage electrical switchgear,
the distribution installation being **characterized in that**:
the first downstream part (6b) of the first transfer circuit (6) comprises a first flow rate regulating device (61) configured to regulate and/or adjust the flow rate of the gaseous phase of the insulating fluid flowing towards the combination point (60),
said installation further comprises second heating means (21, 22) configured to heat the gaseous phase of the insulating fluid at least at the level of the combination point (60) and of the downstream part (6b) of the first transfer circuit (6).

2. The installation according to the preceding claim, **characterized in that** the second heating means (21, 22) are further configured to heat the gaseous phase of the insulating fluid at the level of at least a portion of the first upstream part (6a) of the first transfer circuit (6).

3. The installation according to one of the preceding claims, **characterized in that** the first upstream part (6a) of the transfer circuit (6) comprises at least one fluid conduit (6a), the second heating means (21, 22) comprising a first heating device (21) arranged around all or part of said fluid conduit (6a), in particular the first heating device (21) is of the resistive or inductive type.

4. The installation according to one of the preceding claims, **characterized in that** the second heating means (21, 22) comprise a second heating device (22) arranged around the combination point (60) and the first downstream part (6b) of the first transfer circuit (6).

5. The installation according to the preceding claim, **characterized in that** the second heating device (22) comprises a thermally insulating envelope (22a) defining an internal volume in which the downstream part of the first transfer circuit (6), the first flow rate regulating device (61), and the combination point (60) are arranged, and a heating member (22b) adapted to heat said internal volume, in particular the heating member (22b) is of the resistive type.

6. The installation according to the preceding claim, **characterized in that** the thermally insulating envelope (22a) comprises at least one layer of a flexible material, in particular the flexible material comprises at least one woven fabric of threads formed of a thermally insulating material or a non-woven fabric of fibers formed of a thermally insulating material.

7. The installation according to one of claims 5 or 6, **characterized in that** the thermally insulating envelope is formed of several panels connected to each other by removable fastening means.

8. The installation according to one of the preceding claims, **characterized in that** the second transfer circuit (7) comprises a second upstream part (7a) connected to the second container (2) and a second downstream part (7b) connected to the combination point (60), said second downstream part (7b) comprising a second flow rate regulating device (13) configured to regulate and/or adjust the flow rate of the gaseous phase of the carrier fluid flowing towards the combination point (60), the second heating device (22) being preferably configured to heat the second downstream part (7b) of the second transfer circuit (7).

9. The installation according to one of the preceding claims, **characterized in that** it further comprises at least one additional container (3, 4) intended to contain an additional carrier fluid and configured to produce a gaseous phase of said additional carrier fluid at an outlet of the additional container (3, 4), the installation comprising an additional transfer circuit configured to transfer the gaseous phase of the additional carrier fluid from the outlet of the additional container (3, 4) to the combination point (60), the additional transfer circuit comprising an additional upstream part connected to the additional container (3, 4) and an additional downstream part connected to the combination point (60), said additional downstream part comprising an additional flow rate regulating device (18, 19) configured to regulate and/or adjust the flow rate of the gaseous phase of the additional carrier fluid flowing towards the combination point (60), the second heating device (22) being preferably configured to heat the additional downstream part of the additional transfer circuit.

10. The installation according to one of the preceding claims, **characterized in that** the first heating means (10) are configured to heat the liquefied insulating fluid in the first container (1) to a first temperature, the second heating means (21, 22) being configured to heat the vapor phase of the liquefied insulating fluid to a second temperature higher than the first temperature at least at the level of the combination point (60) and of all or part of the first transfer circuit (6).

11. The installation according to one of the preceding claims, **characterized in that** the first heating means (10) are configured to deliver a variable heating power, the installation comprising at least one pressure sensor (PC) configured to measure the pressure prevailing in the first container (1) and a first control unit (41) connected to the pressure sensor (PC) and to the first heating means (10), the first control unit (41) being configured to vary the heating power delivered by the first heating means (10) as a function of the pressure measured by the pressure sensor (PC).

12. The installation according to one of claims 1 to 10, **characterized in that** the first heating means (10) are configured to deliver a variable heating power, the installation comprising at least one temperature measuring member configured to measure the temperature of the first container (1) and a first control unit (41) connected to the temperature measuring member and to the first heating means (10), the first control unit (41) being configured to vary the heating power delivered by the first heating means (10) as a function of the temperature measured by the temperature measuring member.

13. The installation according to one of the preceding claims, **characterized in that** the second container (2) is intended to contain the carrier fluid in liquefied form, the installation comprising third heating means (30) configured to heat the liquefied carrier fluid in the second container (2) so as to vaporize at least a part of the liquefied carrier fluid and to distribute a gaseous phase of the carrier fluid into the second transfer circuit (7).

14. The installation according to one of the preceding claims, **characterized in that** the second transfer circuit (7) comprises an expansion member (5) configured to reduce the pressure of the gaseous phase of the carrier fluid, a reheater (11) arranged upstream of the expansion member (5) so as to heat the gaseous phase before its expansion by the expansion member (5).

15. The installation according to one of the preceding claims, **characterized in that** the distribution circuit (8) comprises at least one of: a mixing device (50) configured to mix the gaseous phase of the insulating fluid and the gaseous phase of the carrier fluid, a pressure-increasing member (53) arranged downstream of the mixing device (50), a buffer tank (12) arranged upstream of the pressure-increasing member (53).

16. A method for distributing an electrical insulating gas mixture to a high-voltage electrical switchgear, said method comprising the following steps:
- a) heating an insulating fluid in the liquid or liquefied state in a first container (1) by first heating means (10) so as to vaporize at least a part of the liquefied insulating fluid and to produce a gaseous phase of the insulating fluid in the first container (1),
- b) passing the gaseous phase of the insulating fluid into a first transfer circuit (6) so as to transfer the gaseous phase of the insulating fluid from the first container (1) to a combination point (60), the first transfer circuit (6) comprising a first upstream part (6a) connected to the first container (1) and a first downstream part (6b) connected on the one hand to the first upstream part (6a) and on the other hand to the combination point (60),
- c) regulating and/or adjusting the flow rate of the gaseous phase of the insulating fluid flowing towards the combination point (60) by means of a first flow rate regulating device (61) arranged on the first downstream part of the first transfer circuit (6),
- d) passing a gaseous phase of a carrier fluid from a second container (2) into a second transfer circuit (7) so as to transfer the gaseous phase of the carrier fluid to the combination point (60),
- e) combining the gaseous phase of the insulating fluid and the gaseous phase of the carrier fluid at the combination point (60) and passing the gaseous phase of the insulating fluid and the gaseous phase of the carrier fluid combined in a distribution circuit (8) adapted to distribute to the high-voltage electrical switchgear an electrical insulating gas mixture comprising the gaseous phase of the insulating fluid and the gaseous phase of the carrier fluid,
- f) heating the gaseous phase of the insulating fluid at least at the level of the point of the combination point (60) and of the downstream part (6b) of the first transfer circuit (6) by second heating means (21, 22).
